# EUROPEAN PATENT APPLICATION

(11) **EP 4 678 904 A1**
(43) Date of publication of application: **14.01.2026**
(21) Application number: 23926128.2
(22) Date of filing: 08.03.2023
(51) Int. Cl.: F02D 23/00, F01N 3/18, F01N 3/24, F02B 37/12, F02B 37/18, F02B 37/24

(54) **SUPERCHARGED INTERNAL COMBUSTION ENGINE CONTROL METHOD AND SUPERCHARGED INTERNAL COMBUSTION ENGINE CONTROL DEVICE**

(71) Applicant: Nissan Motor Co., Ltd., Kanagawa 2208623 (JP); Renault s.a.s, 92100 Boulogne Billancourt (FR)
(72) Inventor: UCHIDA, Ryo, Atsugi-shi, Kanagawa 243-0123 (JP); TSUCHIDA, Hirofumi, Atsugi-shi, Kanagawa 243-0123 (JP)
(74) Representative: Hoefer & Partner Patentanwälte mbB
(86) International application number: PCT/IB2023/000102
(87) International publication number: WO 2024/184667

(57) **Abstract**

A method for controlling an internal combustion engine equipped with a supercharger, including: in a case where when a compressor that rotates in conjunction with a turbine that rotates by receiving energy from exhaust gas discharged from the internal combustion engine takes in fresh air and supplies the fresh air to an intake side of the internal combustion engine, the exhaust gas is purified by a catalyst disposed between an exhaust side of the internal combustion engine and the turbine, adjusting an opening degree of a waste gate valve that is disposed in a branch passage branched from an exhaust passage between the catalyst and the turbine and merging with an exhaust gas exhaust side of the turbine and adjusts a flow rate of the exhaust gas in the branch passage to adjust a flow rate of the exhaust gas to be supplied to the turbine, or adjusting an opening degree of a variable nozzle that adjusts a flow velocity of the exhaust gas to be supplied to the turbine, to increase a back pressure of the exhaust gas to raise a temperature of the exhaust gas, thereby warming up the catalyst; and setting the opening degree of the waste gate valve to a maximum or substantially a maximum when the catalyst starts to be warmed up, and then decreasing the opening degree of the waste gate valve as a temperature of the internal combustion engine rises, or setting the opening degree of the variable nozzle to a maximum or substantially a maximum when the catalyst starts to be warmed up, and then decreasing the opening degree of the variable nozzle as the temperature of the internal combustion engine rises.

## Description

### TECHNICAL FIELD

The present invention relates to a method for controlling an internal combustion engine equipped with a supercharger and a device for controlling an internal combustion engine equipped with a supercharger.

### BACKGROUND ART

JP 2020-118832A discloses a configuration in which a catalyst for purifying exhaust gas is disposed in an exhaust passage connecting an internal combustion engine and a turbine (turbine wheel) of a supercharger, and when warming up the catalyst, a variable nozzle attached in front of the turbine wheel is fully closed, or a waste gate valve disposed in a branch passage branched at a position on a downstream side of the catalyst in the exhaust passage is fully closed.

### SUMMARY OF INVENTION

In the above technique, a back pressure of the exhaust gas in the exhaust passage is increased by fully closing the waste gate valve or the variable nozzle when the catalyst starts to be warmed up, and the warm-up of the catalyst is promoted by raising a temperature of the exhaust gas. In this case, if the back pressure of the exhaust gas is increased, a ratio of residual gas (exhaust gas) in a combustion chamber of the internal combustion engine also increases. If the ratio of the residual gas increases, a ratio of harmful components in the exhaust gas generated in a next combustion cycle decreases, and exhaust performance (cleanliness of the exhaust gas) is improved. However, if the ratio of the residual gas increases while a temperature of the internal combustion engine is low, combustion stability in the next combustion cycle may decrease.

Therefore, an object of the present invention is to provide a method for controlling an internal combustion engine equipped with a supercharger and a device for controlling an internal combustion engine equipped with a supercharger, which keep a combustion stability and exhaust performance in good condition when a catalyst is warmed up.

According to an aspect of the present invention, there is provided a method for controlling an internal combustion engine equipped with a supercharger including: in a case where when a compressor that rotates in conjunction with a turbine that rotates by receiving energy from exhaust gas discharged from the internal combustion engine takes in fresh air and supplies the fresh air to an intake side of the internal combustion engine, the exhaust gas is purified by a catalyst disposed between an exhaust side of the internal combustion engine and the turbine, adjusting an opening degree of a waste gate valve that is disposed in a branch passage branched from an exhaust passage between the catalyst and the turbine and merging with an exhaust gas exhaust side of the turbine and adjusts a flow rate of the exhaust gas in the branch passage to adjust a flow rate of the exhaust gas to be supplied to the turbine, or adjusting an opening degree of a variable nozzle that adjusts a flow velocity of the exhaust gas to be supplied to the turbine, to increase a back pressure of the exhaust gas to raise a temperature of the exhaust gas, thereby warming up the catalyst. This control method sets the opening degree of the waste gate valve to a maximum or substantially a maximum when the catalyst starts to be warmed up, and then decreases the opening degree of the waste gate valve as a temperature of the internal combustion engine rises, or sets the opening degree of the variable nozzle to a maximum or substantially a maximum when the catalyst starts to be warmed up, and then decreases the opening degree of the variable nozzle as the temperature of the internal combustion engine rises.

### BRIEF DESCRIPTION OF DRAWINGS

[FIG. 1] FIG. 1 is an illustration diagram showing an outline of a device (method) for controlling an internal combustion engine of the present embodiment.
[FIG. 2] FIG. 2 is a diagram showing a flow of a catalyst warm-up control of the device (method) for controlling the internal combustion engine of the present embodiment.
[FIG. 3] FIG. 3 is a time chart of each of vehicle parameters in the catalyst warm-up control of the device (method) for controlling the internal combustion engine of the present embodiment.
[FIG. 4] FIG. 4 is a diagram showing a flow of a modification of the catalyst warm-up control of the device (method) for controlling the internal combustion engine of the present embodiment.
[FIG. 5] FIG. 5 is a time chart of each of vehicle parameters in the modification of the catalyst warm-up control of the device (method) for controlling the internal combustion engine of the present embodiment.

### DESCRIPTION OF EMBODIMENTS

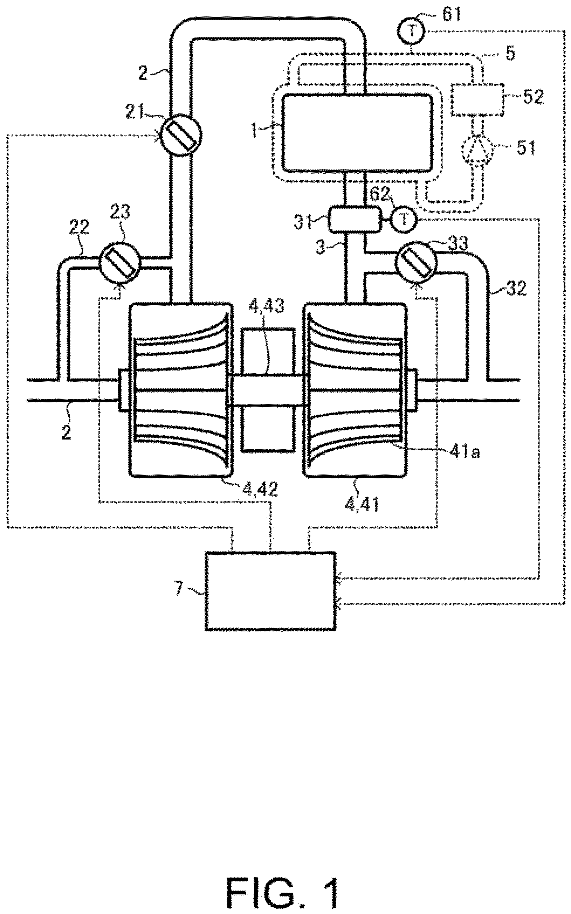

FIG. 1 is an illustration diagram showing an outline of a device (method) for controlling an internal combustion engine 1 of the present embodiment.

The internal combustion engine 1 is, for example, a spark ignition gasoline engine, and is mounted on a vehicle such as an automobile as a drive source.

The internal combustion engine 1 has, for example, a direct injection type configuration, and an ignition plug (not shown) and a fuel injection valve (not shown) that injects fuel into a cylinder (combustion chamber) are provided for each of cylinders. An injection timing and an injection amount of the fuel injection valve and an ignition timing of the ignition plug are controlled by control signals from a control unit 7 (control unit).

The cylinder of the internal combustion engine 1 communicates with an intake passage 2 via an intake valve (not shown) and communicates with an exhaust passage 3 via an exhaust valve (not shown).

The internal combustion engine 1 is incorporated in a coolant water circulation system 5 in which coolant water circulates, and is cooled by the coolant water. The coolant water circulation system 5 is provided with a pump 51 for circulating the coolant water and a cooling unit 52 (radiator, chiller) for cooling the coolant water.

The intake passage 2 supplies fresh air to the internal combustion engine 1, and an air cleaner (not shown), a compressor 42, and a throttle valve (TLV) 21 are arranged from an upstream side.

The air cleaner (not shown) collects foreign matter in the fresh air.

The compressor 42 constitutes a supercharger 4. The compressor 42 takes in the fresh air and supplies the fresh air to the TLV 21.

The TLV 21 adjusts a flow rate of the fresh air to be supplied to the internal combustion engine 1 (combustion chamber) by adjusting an opening degree based on, for example, a depression amount (accelerator opening) of an accelerator pedal during a normal operation of the internal combustion engine 1 (for example, during traveling of a vehicle). The TLV 21 is also a control target when warming up a catalyst 31 described later.

A first branch passage 22 branches from a position of the intake passage 2 where the compressor 42 and the TLV 21 are provided, and the first branch passage 22 merges with the intake passage 2 at a position on an upstream side of the compressor 42 in the intake passage 2. A recirculation valve (RCV) 23 is disposed in the first branch passage 22.

The RCV 23 takes in a part of the air supplied by the compressor 42 and recirculates the air to an intake side of the compressor 42. The RCV 23 is normally closed, but is opened, for example, when a pressure on a downstream side of the compressor 42 becomes high (when the TLV 21 is closed). The RCV 23 is also a control target when warming up the catalyst 31 described later.

The catalyst 31 and a turbine 41 are disposed in the exhaust passage 3. A filter (not shown) for collecting fine particles in the exhaust gas and a muffler (not shown) are disposed at a rear stage of the turbine 41.

The catalyst 31 (three-way catalyst) purifies three components, that is, HC (hydrocarbon), CO (carbon monoxide), and NOx (nitrogen oxide) in the inflowing exhaust gas.

The turbine 41 constitutes the supercharger 4. The turbine 41 (turbine wheel 41a) is connected to the compressor 42 via a shaft 43, and the turbine 41, the shaft 43, and the compressor 42 rotate coaxially. The turbine 41 rotates by receiving energy of the exhaust gas, and transmits a rotational force to the compressor 42 via the shaft 43 to rotate the compressor 42.

A second branch passage 32 branches from a position between the catalyst 31 and the turbine 41 in the exhaust passage 3. The second branch passage 32 is connected to the exhaust passage 3 at a position on a downstream side of the turbine 41, and is arranged to bypass the turbine 41 in the exhaust passage 3. A waste gate valve (WGV) 33 is disposed in the second branch passage 32.

The WGV 33 can freely adjust an opening degree to set the second branch passage 32 to a fully closed state, a predetermined opening degree state, or a fully open state. When the opening degree of the WGV 33 is decreased, a flow rate of the exhaust gas to be supplied to the turbine 41 increases, and conversely, when the opening degree is increased, the flow rate of the exhaust gas to be supplied to the turbine 41 decreases. During the normal operation of the internal combustion engine 1 (for example, during traveling of the vehicle), the WGV 33 prevents an excessive increase in a supercharging pressure of the exhaust passage 3 by appropriately adjusting the opening degree. The WGV 33 is also a control target when warming up the catalyst 31.

Although not shown, a variable nozzle is disposed at the supercharger 4, and the variable nozzle includes a plurality of nozzle vanes provided on an outer periphery of the turbine wheel 41a in the turbine 41, and by adjusting an opening degree of the variable nozzle, an opening area of a region through which the exhaust gas flows to the turbine wheel 41a is adjusted, and the supercharging pressure is adjusted.

When the opening degree of the variable nozzle is decreased, the opening area decreases, a flow velocity of the exhaust gas to be supplied to the turbine wheel 41a increases, recovery energy of the turbine wheel 41a increases, and the supercharging pressure increases. Conversely, when the opening degree of the variable nozzle is increased, the opening area increases, the flow velocity of the exhaust gas to be supplied to the turbine wheel 41a decreases, the recovery energy of the turbine wheel 41a decreases, and the supercharging pressure decreases. The variable nozzle is also a control target when warming up the catalyst 31.

A first temperature sensor 61 detects a temperature of the coolant water for cooling the internal combustion engine 1.

A second temperature sensor 62 detects a temperature of the catalyst 31.

The control unit 7 (control unit) controls the internal combustion engine 1 (fuel injection valve, intake valve, exhaust valve, ignition plug), the TLV 21, the RCV 23, the WGV 33 (or variable nozzle).

The control unit 7 calculates a required load of the internal combustion engine 1 based on a detection value of an accelerator opening sensor (not shown), controls the opening degree of the TLV 21 based on the required load, and controls an operation timing of the internal combustion engine 1 (fuel injection valve, intake valve, exhaust valve, ignition plug) and a revolution speed of the internal combustion engine 1 (crank shaft).

The control unit 7 releases the RCV 23 at a predetermined opening degree when a pressure at a position on a downstream side of the TLV 21 in the intake passage 2 exceeds a predetermined upper limit value.

The control unit 7 releases the WGV 33 at a predetermined opening degree when a pressure at a position on an upstream side of the turbine 41 in the exhaust passage 3 exceeds a predetermined upper limit value.

When the pressure at the position on the upstream side of the turbine 41 in the exhaust passage 3 becomes lower than the predetermined lower limit value, the control unit 7 decreases the opening degree of the variable nozzle to the predetermined opening degree to prevent a decrease in a rotation speed of the turbine 41.

The control unit 7 executes a warm-up control of the catalyst 31 when the temperature of the catalyst 31 detected by the second temperature sensor 62 becomes lower than a predetermined lower limit temperature.

When warming up the catalyst 31, the warm-up of the catalyst 31 is promoted by fully closing the opening degree of the WGV 33 or fully closing the opening degree of the variable nozzle to increase the back pressure of the exhaust gas and raise the temperature of the exhaust gas. On the other hand, when the back pressure of the exhaust gas is increased, a ratio of residual gas (exhaust gas) in the cylinder of the internal combustion engine 1 increases.

For example, in a case where the internal combustion engine 1 is a direct injection type, the fresh air is supplied to the cylinder in a next combustion cycle to be mixed with the residual gas, and fuel is directly injected (vaporized) into the mixed gas to be ignited and combusted. In this case, when the ratio of the residual gas to the fresh air is increased, the fuel is easily heated and vaporized by the high-temperature residual gas, and thus, PN (for example, soot) and unburned HC in the exhaust gas in the next combustion cycle can be reduced, and cleanliness (exhaust performance) of the exhaust gas can be enhanced.

On the other hand, as a temperature of a wall surface of the cylinder of the internal combustion engine 1 decreases, a ratio of the injected fuel adhering to the wall surface of the cylinder as a liquid increases, and if the ratio of the residual gas increases in this state, the ratio at which the vaporized fuel and the fresh air (oxygen) are mixed decreases, and a combustion stability deteriorates.

However, as the temperature of the wall surface of the cylinder of the internal combustion engine 1 increases, an amount of components of the injected fuel adhering to the wall surface of the cylinder as a liquid decreases, and the ratio of the vaporized fuel mixed with the fresh air (oxygen) increases, and the combustion stability improves. In this case, a predetermined combustion stability can be maintained even if the ratio of the residual gas is increased. Here, the combustion stability "σPi" is an index representing magnitude of a cycle fluctuation of the torque of the internal combustion engine 1, and the combustion stability deteriorates as the combustion stability "σPi" increases.

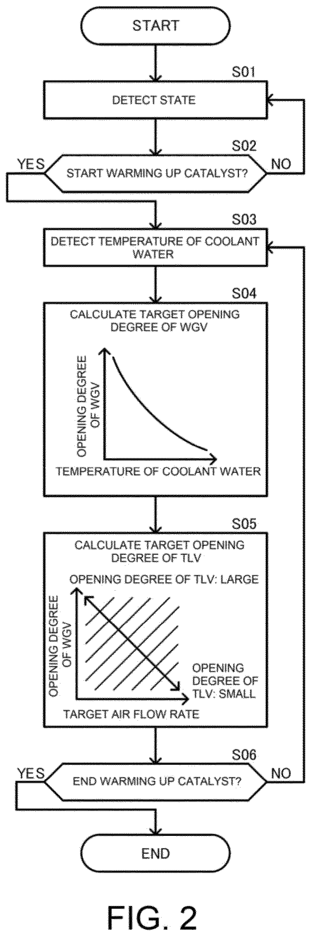

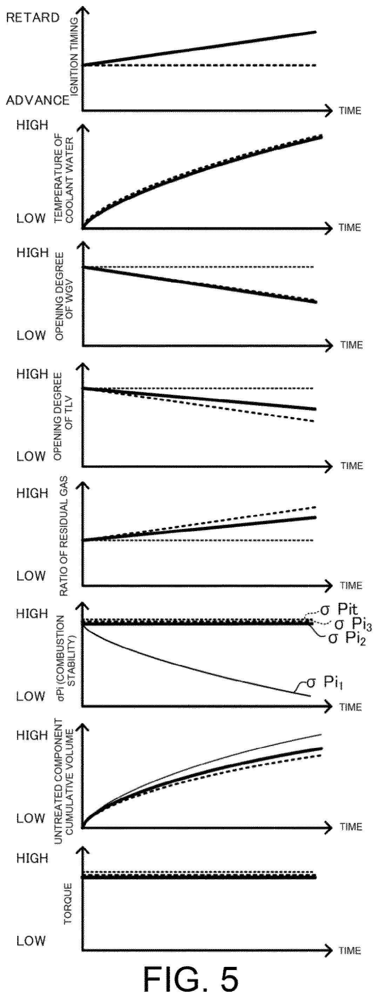

Incidentally, a first combustion stability "σPi1" (FIGS. 2 and 5) when the WGV 33 (or the variable nozzle) is always fully opened during the warm-up of the catalyst 31 decreases as the temperature of the internal combustion engine 1 rises. However, since no back pressure is applied to the exhaust gas, the warm-up of the catalyst 31 cannot be promoted.

On the other hand, when the WGV 33 and the variable nozzle are always fully closed during the warm-up of the catalyst 31, the back pressure can be applied to the exhaust gas. However, the combustion stability in that case becomes a higher value than that in a case where the WGV 33 or the variable nozzle is fully opened from an initial stage of the warm-up, the combustion in the internal combustion engine 1 becomes unstable, and the warm-up of the catalyst 31 becomes difficult.

Therefore, in the present embodiment, when the warm-up of the catalyst 31 is started while the WGV 33 (or the variable nozzle) is fully opened, for example, the first combustion stability "σPi1" (or a value close to the combustion stability "σPi1") when the temperature of the internal combustion engine 1 is started to change at a temperature approximately equal to an ambient temperature is set as a target combustion stability "σPit", and a control is executed to decrease the opening degree of the WGV 33 as the temperature of the internal combustion engine 1 rises such that a second combustion stability "σPi2" when the opening degree of the WGV 33 decreases as the temperature of the internal combustion engine 1 rises becomes the target combustion stability "σPit" or a value close to the target combustion stability "σPit". Accordingly, the exhaust performance (cleanliness of the exhaust gas) and the combustion stability are kept in good condition. The target combustion stability "σPit" is constant regardless of the temperature of the internal combustion engine 1.

Therefore, the control unit 7 estimates the temperature of the internal combustion engine 1 (the temperature of the wall surface of the cylinder of the internal combustion engine 1) based on the temperature of the coolant water detected by a first temperature sensor 61. A temperature sensor (not shown) that measures the temperature of the wall surface of the cylinder of the internal combustion engine 1 may be disposed to directly detect the temperature of the wall surface of the cylinder. Furthermore, a temperature sensor (not shown) that measures a temperature of lubricating oil that lubricates the internal combustion engine 1 may be disposed, and the temperature of the wall surface of the cylinder may be estimated based on the temperature detected by the temperature sensor.

### [Warm-up Control of Catalyst 31]

FIG. 2 is a diagram showing a flow of a catalyst warm-up control of the device (method) for controlling the internal combustion engine 1 of the present embodiment. In the flow shown below, it is assumed that the opening degree of the WGV 33 is decreased (the opening degree of the variable nozzle is set constant (for example, to be fully closed)) as the temperature of the internal combustion engine 1 rises, and the same applies to a case where the opening degree of the WGV 33 is kept constant (for example, fully closed) and the opening degree of the variable nozzle is decreased as the temperature of the internal combustion engine 1 rises, and a case where the opening degree of the WGV 33 and the opening degree of the variable nozzle are simultaneously decreased as the temperature of the internal combustion engine 1 rises.

In step S01, the control unit 7 detects a state of the internal combustion engine 1 (whether the internal combustion engine 1 is operating or the like).

In step S02, the control unit 7 determines whether to start warming up the catalyst 31, that is, whether the temperature of the catalyst 31 is lower than the predetermined lower limit temperature, and proceeds to step S03 if YES, and returns to step S01 if NO.

In step S03, the control unit 7 detects the temperature of the coolant water (corresponding to the temperature of the wall surface of the cylinder of the internal combustion engine 1).

In step S04, the control unit 7 calculates the opening degree of the WGV 33 with reference to a map showing a relationship between the temperature of the coolant water (corresponding to the temperature of the wall surface of the cylinder) and the opening degree of the WGV 33 optimized therefor (the opening degree of the WGV 33 when the second combustion stability "σPi2" matches or approaches the target combustion stability "σPit"). The opening degree of the WGV 33 may be freely set within a range in which the second combustion stability "σPi2" is equal to or higher than the first combustion stability "σPi1" and equal to or lower than the target combustion stability "σPit".

In step S05, the control unit 7 calculates a target air flow rate to be taken into the internal combustion engine 1 based on the accelerator opening, and calculates the opening degree of the TLV 21 based on a map representing a relationship between the target air flow rate and the opening degree of the WGV 33.

Here, a plurality of lines in the map of step S05 represent equal opening degree lines of the opening degree of the TLV 21, and the opening degree of the TLV 21 is constant on the equal opening degree lines.

When the opening degree of the TLV 21 decreases, the flow rate of the exhaust gas to be supplied to the turbine 41 increases accordingly, rotation speeds of the turbine 41 and the compressor 42 increase, and the flow rate of the fresh air taken in by the compressor 42 increases. Therefore, the flow rate of the fresh air flowing through the TLV 21 increases by an amount corresponding to the increase in the flow rate of the fresh air taken in by the compressor 42. Therefore, the target air flow rate is controlled to be constant by decreasing the opening degree of the TLV 21 by the amount corresponding to the increase in the flow rate of the fresh air taken in by the compressor 42. Accordingly, desired torque can be generated and the torque can be kept constant.

In step S06, the control unit 7 determines whether to end the warm-up of the catalyst 31, that is, whether the temperature of the catalyst 31 reaches the predetermined lower limit temperature, and proceeds to END if YES, and returns to step S03 if NO. The control unit 7 ends the warm-up if the temperature of the catalyst 31 becomes equal to or higher than the predetermined lower limit value.

### [Time Chart of Warm-up Control of Catalyst 31]

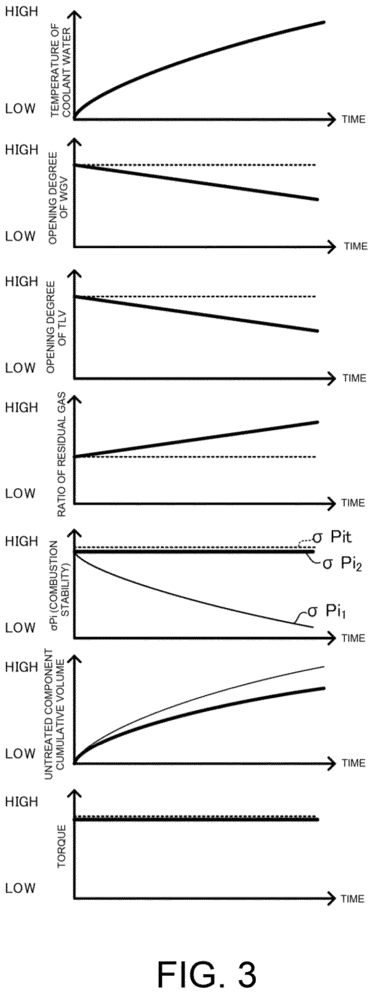

FIG. 3 is a time chart of each of vehicle parameters obtained by the device (method) for controlling the internal combustion engine 1 of the present embodiment.

In FIG. 3, it is assumed that the internal combustion engine 1 is started while a long time elapses after the internal combustion engine 1 is stopped and the temperature of the internal combustion engine 1 is substantially the same as the air temperature.

When the internal combustion engine 1 is started, the temperature of the cylinder is approximately equal to the ambient temperature, and the first combustion stability "σPi1" is a high value. Therefore, when the internal combustion engine 1 is started, the opening degree of the WGV 33 (or the variable nozzle) is set to the maximum or substantially the maximum, and the ratio of the residual gas remaining in the cylinder is set to the minimum.

In the time chart of FIG. 3, it is assumed that the torque is constant, and the opening degree of the TLV 21 (the opening degree of the TLV 21 and/or the RCV 23) is set to maintain the torque. When the RCV 23 is released at the predetermined opening degree, the fresh air taken in by the compressor 42 is recirculated to the intake side of the compressor 42. Accordingly, the fresh air heated through the intake passage 2 and the fresh air from the outside are mixed to be supplied to the TLV 21, and thus the temperature of the fresh air before being supplied to the cylinder rises and the fuel injected into the cylinder can be easily vaporized.

After the internal combustion engine 1 is started, the temperature of the internal combustion engine 1 (the wall surface of the cylinder, the coolant water) monotonically rises over time, and accordingly, the first combustion stability "σPi1" also monotonically decreases and stabilizes as the temperature of the internal combustion engine 1 rises.

However, in the present embodiment, the opening degree of the WGV 33 is decreased as the temperature of the internal combustion engine 1 rises such that the second combustion stability "σPi2" always matches the target combustion stability "σPit" or the second combustion stability "σPi2" always approaches the target combustion stability "σPit". Accordingly, the ratio of the residual gas in the cylinder increases, the temperature of the mixed gas of the fresh air and the residual gas rises, and the fuel supplied into the cylinder is easily vaporized. Therefore, an untreated component cumulative volume (concentration obtained by cumulating PN, HC, and NOx) (thick solid line) in the exhaust gas before being supplied to the catalyst 31 can be reduced as compared with that (thin solid line) in a case where the opening degree of the WGV 33 has been fully closed since the internal combustion engine 1 is started, and the exhaust performance (cleanliness of the exhaust gas) can be enhanced.

Although the catalyst 31 is warmed up by supplying the exhaust gas to the catalyst 31, the temperature of the exhaust gas is raised by increasing the back pressure of the exhaust gas, and the warm-up of the catalyst 31 is promoted.

When the opening degree of the WGV 33 is decreased, the flow rate of the exhaust gas to be supplied to the turbine 41 increases, and the rotation speeds of the turbine 41 and the compressor 42 increase, so that the flow rate of the fresh air to be supplied to the TLV 21 increases. Therefore, the opening degree of TLV 21 is decreased in response to the decrease in the opening degree of WGV 33 to keep the flow rate of the fresh air to be supplied to the internal combustion engine 1 (cylinder) constant, so that the torque of the internal combustion engine 1 can be kept constant.

### [Modification of Warm-up Control of Catalyst 31]

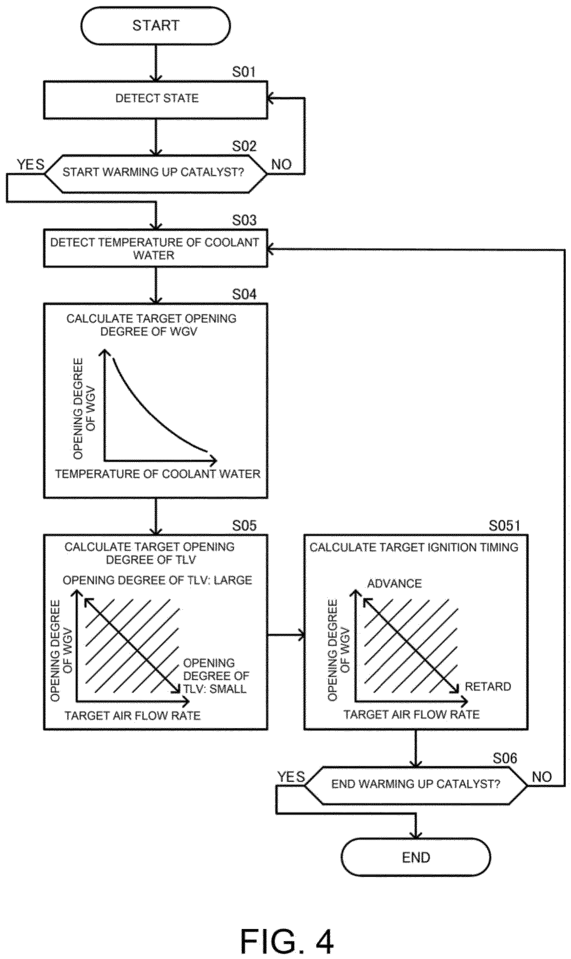

FIG. 4 is a diagram showing a flow of a modification of the catalyst warm-up control of the device (method) for controlling the internal combustion engine 1 of the present embodiment. In the flow shown in FIG. 4, step S051 is added between step S05 and step S06 of the flow shown in FIG. 2.

In step S051, the control unit 7 controls the ignition timing of the ignition plug based on the opening degree of the WGV 33 calculated in step S04 and the target air flow rate calculated in step S05. A plurality of lines of a map shown in step S051 are equal ignition timing lines, and the ignition timing is constant on the equal ignition timing lines. The ignition timing shifts to a retard side as the opening degree of the WGV 33 decreases or the target air flow rate increases. By performing such an ignition timing retarding control, although the torque slightly decreases, the temperature of the exhaust gas can be raised, and thus the warm-up of the catalyst 31 can be promoted. Step S04 and step S05 in FIG. 4 are performed on an assumption that step S051 is executed. Therefore, a map shown in step S04 of FIG. 4 and the map shown in step S04 of FIG. 2 may be different from each other or may be the same as each other. Similarly, a map shown in step S05 of FIG. 4 and the map shown in step S05 of FIG. 2 may be different from each other or may be the same as each other. Even when the map shown in step S05 of FIG. 4 and the map shown in step S05 of FIG. 2 are the same as each other, according to an idle speed control, a control of increasing an air amount (increase the opening degree of the TLV 21) by the amount of torque that decreases due to the retard of the ignition timing is performed, and equal torque is maintained.

### [Time Chart of Modification of Warm-up Control of Catalyst 31]

FIG. 5 is a time chart of each of vehicle parameters in the modification of the catalyst warm-up control of the device (method) for controlling the internal combustion engine 1 of the present embodiment. In FIG. 5, the modification (thick solid line) is the time chart of each of the vehicle parameters when step S01 to step S05, step S051, and step S06 of FIG. 4 are executed, and a basic form (thick dashed line) is a time chart when step S01 to step S06 of FIG. 2 are executed and step S051 of FIG. 4 is not executed.

The modification and the basic form have the same initial state. Regarding the ignition timing of the ignition plug, in the basic form (FIG. 2), the ignition timing is not subjected to an operation and is constant, but in the modification (FIG. 4), the ignition timing is shifted to the retard side over time (temperature rise of the internal combustion engine 1).

Accordingly, the torque (solid line) based on the control flow (FIG. 4) of the modification is slightly lower than the torque (dashed line) based on the control flow (FIG. 2) of the basic form.

A change (solid line) over time in the opening degree of the TLV 21 based on the control flow (FIG. 4) of the modification has a lower decrease rate than that of a change over time (dashed line) in the opening degree of the TLV 21 based on the control flow (FIG. 2) of the basic form. That is, in the modification, the supply amount of the fresh air of the TLV 21 is larger than the supply amount of the fresh air in the basic form. Accordingly, a ratio of decrease in torque is reduced.

As described above, since the supply amount of the fresh air of the modification is larger than the supply amount of the fresh air of the basic form, the ratio of the residual gas (solid line) in the cylinder based on the control flow (FIG. 4) of the modification is lower in an increase speed than the ratio of the residual gas (dashed line) in the cylinder based on the control flow (FIG. 2) of the basic form.

Accordingly, an untreated component cumulative volume (thick solid line) based on the control flow (FIG. 4) of the modification is slightly higher than the untreated component cumulative volume (dashed line) based on the control flow (FIG. 2) of the basic form.

By performing the control of the above modification, the torque slightly decreases and the untreated component cumulative volume slightly increases, but the warm-up of the catalyst 31 is promoted more than that in the case of the basic form, and the purification of the three components, that is, HC (hydrocarbon), CO (carbon monoxide), and NOx (nitrogen oxide) in the exhaust gas can be achieved early.

There is almost no difference in a change over time in the temperature of the coolant water between the modification (solid line) and the basic form (dashed line).

There is almost no difference in a change over time in the opening degree of the WGV 33 between the modification (solid line) and the basic form (dashed line).

There is almost no difference between a combustion stability (third fuel stability "σPi3" (solid line)) based on the control flow of the modification (FIG. 4) and the combustion stability (second fuel stability "σPi2" (thick dashed line)) based on the control flow of the basic form (FIG. 2).

### [Effects of Present Embodiment]

The present embodiment relates to the method for controlling the internal combustion engine 1 equipped with the supercharger 4 including: in a case where when the compressor 42 that rotates in conjunction with the turbine 41 that rotates by receiving energy from the exhaust gas discharged from the internal combustion engine 1 takes in the fresh air and supplies the fresh air to the intake side of the internal combustion engine 1, the exhaust gas is purified by the catalyst 31 disposed between the exhaust side of the internal combustion engine 1 and the turbine 41, adjusting the opening degree of the waste gate valve (WGV 33) that is disposed in the branch passage (second branch passage 32) branched from the exhaust passage 3 between the catalyst 31 and the turbine 41 and merging with the exhaust gas exhaust side of the turbine 41 and adjusts the flow rate of the exhaust gas in the branch passage (second branch passage 32) to adjust the flow rate of the exhaust gas to be supplied to the turbine 41, or adjusting the opening degree of the variable nozzle (not shown) that adjusts the flow velocity of the exhaust gas to be supplied to the turbine 41 to increase the back pressure of the exhaust gas to raise the temperature of the exhaust gas, thereby warming up the catalyst 31; and setting the opening degree of the waste gate valve (WGV 33) to the maximum or substantially the maximum when the catalyst 31 starts to be warmed up, and then decreasing the opening degree of the waste gate valve (WGV 33) as the temperature of the internal combustion engine 1 rises, or setting the opening degree of the variable nozzle (not shown) to the maximum or substantially the maximum when the catalyst 31 starts to be warmed up, and then decreasing the opening degree of the variable nozzle (not shown) as the temperature of the internal combustion engine 1 rises.

According to the above method, when the temperature of the internal combustion engine 1 is low, the ratio of the residual gas in the cylinder is set to be low to prevent the decrease in the combustion stability, and the ratio of the residual gas is increased as the temperature of the internal combustion engine 1 rises to maintain the combustion stability (the second combustion stability "σPi2") at a predetermined value (the target combustion stability "σPit" or the value close to the target combustion stability "σPit"), whereby harmful components in the exhaust gas can be reduced by increasing the ratio of the residual gas in the cylinder. Therefore, the combustion stability and the exhaust performance can be kept in good condition during the warm-up of the catalyst 31.

In the present embodiment, when the torque of the internal combustion engine 1 is controlled by adjusting, by the throttle (TLV 21), the supply amount of the fresh air to be supplied from the compressor 42 to the intake side of the internal combustion engine 1, the opening degree of the throttle (TLV 21) is decreased when the opening degree of the waste gate valve (WGV 33) is decreased or when the opening degree of the variable nozzle (not shown) is decreased.

According to the above method, it is possible to prevent fluctuations in the torque during the warm-up and generate and maintain desired torque.

In the present embodiment, when the torque of the internal combustion engine 1 is controlled by adjusting, by the throttle (TLV 21), the supply amount of the fresh air to be supplied from the compressor 42 to the intake side of the internal combustion engine 1, and the flow rate of the fresh air supplied to the throttle (TLV 21) is adjusted by adjusting the opening degree of the recirculation valve (RCV 23) that recirculates at least a part of the fresh air to be supplied from the compressor 42 to the throttle (TLV 21) to a fresh air introduction side of the compressor 42, the opening degree of the throttle (TLV 21) is decreased and/or the opening degree of the recirculation valve (RCV 23) is increased when the opening degree of the waste gate valve (WGV 33) is decreased, or the opening degree of the throttle (TLV 21) is decreased and/or the opening degree of the recirculation valve (RCV 23) is increased when the opening degree of the variable nozzle (not shown) is decreased.

According to the above method, it is possible to prevent fluctuations in the torque during the warm-up and generate and maintain desired torque. Further, when the recirculation valve (RCV 23) is released at a predetermined opening degree, the fresh air taken in by the compressor 42 is recirculated to the intake side of the compressor 42. Accordingly, the fresh air heated through the intake passage 2 and the fresh air from the outside are mixed to be supplied to the throttle (TLV 21), and thus the temperature of the fresh air before being supplied to the cylinder is increased and the fuel injected into the cylinder can be easily vaporized.

In the present embodiment, the temperature of the internal combustion engine 1 (the temperature of the wall surface of the cylinder) is estimated based on the temperature of the coolant water for cooling the internal combustion engine 1.

By the above method, the temperature of the internal combustion engine 1 (the temperature of the wall surface of the cylinder) can be estimated by a simple method.

The device for controlling the internal combustion engine 1 equipped with the supercharger 4 of the present embodiment includes: the supercharger 4 including the turbine 41 that rotates by receiving energy from the exhaust gas discharged from the internal combustion engine 1 and the compressor 42 that takes in the fresh air by rotating in conjunction with the rotation of the turbine 41 and supplies the fresh air to the intake side of the internal combustion engine 1; the catalyst 31 disposed between the exhaust side of the internal combustion engine 1 and the turbine 41 and configured to purify the exhaust gas; the waste gate valve (WGV 33) disposed in the branch passage (second branch passage 32) branched from the exhaust passage 3 between the catalyst 31 and the turbine 41 and merging with the exhaust side of the turbine 41, and configured to adjust the flow rate of the exhaust gas to be supplied to the turbine 41 by adjusting the flow rate of the exhaust gas in the branch passage (second branch passage 32); and the variable nozzle (not shown) configured to adjust a flow velocity of the exhaust gas to be supplied to the turbine 41. In the device (control unit 7) for controlling the internal combustion engine 1 equipped with the supercharger 4, the opening degree of the waste gate valve (WGV 33) or the opening degree of the variable nozzle (not shown) is adjusted to increase the back pressure of the exhaust gas and raise the temperature of the exhaust gas, thereby warming up the catalyst 31, and the opening degree of the waste gate valve (WGV 33) is set to a maximum or substantially a maximum when the catalyst 31 starts to be warmed up, and then the opening degree of the waste gate valve (WGV 33) is decreased as the temperature of the internal combustion engine 1 rises, or the opening degree of the variable nozzle (not shown) is set to the maximum or substantially the maximum when the catalyst 31 starts to be warmed up, and then the opening degree of the variable nozzle (not shown) is decreased as the temperature of the internal combustion engine 1 rises.

According to the above configuration, when the temperature of the internal combustion engine 1 is low, the ratio of the residual gas in the cylinder is set to be low to prevent the decrease in the combustion stability, and the ratio of the residual gas is increased as the temperature of the internal combustion engine 1 rises to maintain the combustion stability (the second combustion stability "σPi2") at a predetermined value (the target combustion stability "σPit" or the value close to the target combustion stability "σPit"), whereby harmful components in the exhaust gas can be reduced by increasing the ratio of the residual gas in the cylinder. Therefore, the combustion stability and the exhaust performance can be kept in good condition during the warm-up of the catalyst 31.

Although the embodiments of the present invention have been described above, the above embodiments merely exemplify some of application examples of the present invention and do not intend to limit the technical scope of the present invention to the specific configurations of the above embodiments. The above embodiment can be combined as appropriate.

## Claims

1. A method for controlling an internal combustion engine equipped with a supercharger, comprising:
in a case where when a compressor that rotates in conjunction with a turbine that rotates by receiving energy from exhaust gas discharged from the internal combustion engine takes in fresh air and supplies the fresh air to an intake side of the internal combustion engine, the exhaust gas is purified by a catalyst disposed between an exhaust side of the internal combustion engine and the turbine, adjusting an opening degree of a waste gate valve that is disposed in a branch passage branched from an exhaust passage between the catalyst and the turbine and merging with an exhaust gas exhaust side of the turbine and adjusts a flow rate of the exhaust gas in the branch passage to adjust a flow rate of the exhaust gas to be supplied to the turbine, or adjusting an opening degree of a variable nozzle that adjusts a flow velocity of the exhaust gas to be supplied to the turbine, to increase a back pressure of the exhaust gas to raise a temperature of the exhaust gas, thereby warming up the catalyst; and
setting the opening degree of the waste gate valve to a maximum or substantially a maximum when the catalyst starts to be warmed up, and then decreasing the opening degree of the waste gate valve as a temperature of the internal combustion engine rises, or setting the opening degree of the variable nozzle to a maximum or substantially a maximum when the catalyst starts to be warmed up, and then decreasing the opening degree of the variable nozzle as the temperature of the internal combustion engine rises.

2. The method for controlling an internal combustion engine equipped with a supercharger according to claim 1, wherein
the method further comprises:
in a case of controlling torque of the internal combustion engine by adjusting, by a throttle, a supply amount of the fresh air to be supplied from the compressor to the intake side of the internal combustion engine,
decreasing an opening degree of the throttle when decreasing the opening degree of the waste gate valve or when decreasing the opening degree of the variable nozzle.

3. The method for controlling an internal combustion engine equipped with a supercharger according to claim 1, wherein
the method further comprises:
in a case of controlling torque of the internal combustion engine by adjusting, by a throttle, a supply amount of the fresh air to be supplied from the compressor to the intake side of the internal combustion engine, and adjusting a flow rate of the fresh air to be supplied to the throttle by adjusting an opening degree of a recirculation valve that recirculates at least a part of the fresh air to be supplied from the compressor to the throttle to a fresh air introduction side of the compressor,
decreasing an opening degree of the throttle and/or increasing the opening degree of the recirculation valve when decreasing the opening degree of the waste gate valve, or
decreasing the opening degree of the throttle and/or increasing the opening degree of the recirculation valve when decreasing the opening degree of the variable nozzle.

4. The method for controlling an internal combustion engine equipped with a supercharger according to claim 1, wherein
the temperature of the internal combustion engine is estimated based on a temperature of coolant water for cooling the internal combustion engine.

5. A device for controlling an internal combustion engine equipped with a supercharger, comprising:
the supercharger including a turbine that rotates by receiving energy from exhaust gas discharged from the internal combustion engine, and a compressor that takes in fresh air by rotating in conjunction with the rotation of the turbine and supplies the fresh air to an intake side of the internal combustion engine;
a catalyst disposed between an exhaust side of the internal combustion engine and the turbine and configured to purify the exhaust gas;
a waste gate valve disposed in a branch passage branched from an exhaust passage between the catalyst and the turbine and merging with an exhaust side of the turbine, and configured to adjust a flow rate of the exhaust gas to be supplied to the turbine by adjusting a flow rate of the exhaust gas in the branch passage; and
a variable nozzle configured to adjust a flow velocity of the exhaust gas to be supplied to the turbine, wherein
an opening degree of the waste gate valve or an opening degree of the variable nozzle is adjusted to increase a back pressure of the exhaust gas to raise a temperature of the exhaust gas, thereby warming up the catalyst, and
the opening degree of the waste gate valve is set to a maximum or substantially a maximum when the catalyst starts to be warmed up, and then the opening degree of the waste gate valve is decreased as a temperature of the internal combustion engine rises, or the opening degree of the variable nozzle is set to a maximum or substantially a maximum when the catalyst starts to be warmed up, and then the opening degree of the variable nozzle is decreased as the temperature of the internal combustion engine rises.
